# FASCICULE DE BREVET EUROPEEN

(11) **EP 1 139 371 B1**
(45) Date de publication et mention de la délivrance du brevet: **27.12.2006**
(21) Numéro de dépôt: 01400784.3
(22) Date de dépôt: 27.03.2001
(51) Int. Cl.: H01H 71/10, H01H 3/12

(54) **Boîtier de distribution de tension secteur pour appareils électroniques**
Elektrisches Netzverteilungsgehäuse für elektronische Geräte
Network voltage distribution box for electronic apparatuses

(30) Priorité: 28.03.2000 FR 0003915
(43) Date de publication de la demande: 04.10.2001
(73) Titulaire: BULL S.A., 78430 Louveciennes (FR)
(72) Inventeur: Carteau, Daniel, 78180 Montigny le Bretonneux (FR); Leparoux, Alain, 49000 Angers (FR)

(56) Documents cités:
- US-A- 4 011 423
- US-A- 5 153 551
- US-A- 5 712 515

## Description

L'invention se rapporte à un boîtier de distribution de tension secteur propre à distribuer une tension secteur à de multiples appareils électriques. L'invention s'applique à tout système nécessitant une distribution d'alimentation de courants alternatifs ou continus. L'invention s'applique, par exemple, à une armoire informatique de stockage de données incorporant des sous-systèmes à mémoire de masse, des éléments de réseau de type SAN (Storage Area Network) tels que des concentrateurs, des commutateurs, etc. L'invention s'applique notamment aux armoires informatique dont les sous-systèmes de mémoire de masse comprennent des disques enregistrant des données selon la technologie RAID (Redundant Array of Independent Disks) ou la technologie JBOD (Just a Bunch Of Disks), toutes deux connues de l'homme du métier.

Dans la suite de la description, nous utiliserons l'expression « appareils électriques » en lieu et place de l'expression « sous-systèmes à mémoire de masse et éléments de réseau ».

De manière générale, un boîtier de distribution de tension secteur comprend au moins un point de distribution de l'alimentation, au moins une prise femelle sur sa surface destinée à recevoir une prise mâle d'un câble d'un appareil électrique, au moins un disjoncteur comprenant un poussoir respectif pour son réarmement. Le point de distribution est relié électriquement par l'intermédiaire d'un câble électrique respectif à un disjoncteur réarmable manuellement. Un disjoncteur est relié par l'intermédiaire d'un câble électrique à au moins une prise femelle.

Dans l'exemple choisi, l'armoire informatique a une forme parallélépipédique avec quatre faces verticales et deux faces horizontales.

Cette armoire comprend deux ouvertures sur ces faces verticales :
- Une première ouverture, constituant la face avant de l'armoire, permettant à un utilisateur d'utiliser le volume de l'armoire en y insérant les appareils électriques. Les câbles électriques de chaque appareil sont accessibles en face arrière qui constitue la deuxième ouverture définie ci-dessous.
- Une deuxième ouverture située sur la face de l'armoire opposée à la première ouverture. Cette deuxième ouverture constitue la face arrière de l'armoire et permet à un utilisateur d'insérer le boîtier de distribution et, notamment, de relier électriquement les appareils électriques au boîtier de distribution par l'intermédiaire de câbles électriques respectifs. La face accessible du boîtier de distribution se situe sur cette face arrière de l'armoire.

Les branchements électriques des appareils électriques de l'armoire avec le boîtier de distribution sont réalisés sur la face accessible du boîtier de distribution. A cet effet, sur sa face accessible, le boîtier de distribution doit comprendre en nombre, autant de prises femelles que d'appareils électriques à alimenter dans l'armoire.

Un boîtier de distribution comprend également des disjoncteurs à réarmement manuel assurant une protection contre les pannes éventuelles dans un appareil électrique quelconque de l'armoire. Généralement, ces disjoncteurs sont disposés sur la face accessible du boîtier de distribution à proximité de la prise femelle qui lui est associée.

Rappelons qu'une panne peut être due à une surconsommation ou à un court-circuit dans un appareil quelconque de l'armoire.

Le boîtier de distribution doit donc comprendre sur sa face accessible autant de prises femelles et de disjoncteurs que d'appareils électriques à alimenter dans l'armoire.

Une solution simpliste peut consister à construire des boîtiers avec une taille telle que sa face accessible puisse recevoir autant de prises femelles et de disjoncteurs que d'appareils électriques à alimenter dans l'armoire.

Le gros problème est que, de façon à favoriser l'ouverture des marchés en assurant la compatibilité et l'interopérabilité des armoires informatiques entre elles, la construction d'une armoire informatique et des appareils électriques associés doivent être conçus selon des normes précises.

En l'espèce, le présent boîtier de distribution doit être conçu selon le standard EIA (de 19 pouces (1 Pouce = 2.54cm) et doit avoir une hauteur de 1 U (~44 mm).

Concrètement, l'armoire informatique choisie comme exemple d'illustration dans la suite de la description comprend 12 appareils électriques. Le boîtier de distribution nécessite donc sur sa face accessible
- 12 prises normalisées sur sa face accessible par un utilisateur,
- autant de disjoncteurs thermiques de protection (avec visibilité de leur disjonction éventuelle),
- un courant total supporté au maximum de 24 Ampères,
- ainsi que la sortie du gros câble d'alimentation de l'armoire.

Or, il est matériellement impossible, pour des raisons de place, de loger sur la face accessible d'un boîtier de distribution de 1U, une sortie de câble, 12 prises femelles de distribution secteur et les disjoncteurs associés.

L'invention vise à résoudre ce problème, en fournissant un boîtier de distribution de conception simple et économique, et d'utilisation aisée et sûre.

Le document US-A-5 153 551 décrit un boîtier de distribution selon le préambule des revendications 1 et 8.

A cet effet, l'invention a pour objet un boîtier de distribution de tension secteur selon la revendication 1.

Selon un mode de réalisation préféré de l'invention, le mécanisme de réarmement comprend deux parties :
- une première partie mécanique fixant ledit au moins un disjoncteur (BRK1-BRK6) à l'intérieur du boîtier,
- une deuxième partie comprenant au moins un réarmeur (RM) propre à réarmer ledit au moins un disjoncteur à distance. A cet effet, dans notre exemple de réalisation, le réarmeur est associé à un moyen de commande ayant pour fonction de commander le déplacement du réarmeur (RM) qui lui est associé à l'intérieur du boîtier.

Selon ce même mode de réalisation, la deuxième partie comprend une tige poussoir liée à une de ses extrémités au réarmeur, son autre extrémité se prolongeant à l'extérieur du boîtier au travers d'une ouverture pratiquée sur la face accessible du boîtier.

Le choix du mécanisme de réarmement est fonction du choix du type de disjoncteur utilisé.

Avantageusement, le réarmeur est maintenu éloigné du poussoir dudit au moins un disjoncteur par l'intermédiaire d'au moins un ressort et le réarmement dudit au moins un disjoncteur s'effectue en comprimant ledit au moins un ressort jusqu'à ce que le poussoir dudit au moins un disjoncteur s'enfonce et réarme le disjoncteur.

De préférence, un disjoncteur protège un appareil électrique respectif de l'armoire, et chaque disjoncteur est associé à un mécanisme de réarmement de façon à identifier l'appareil électrique sur lequel est survenue la panne.

Dans notre exemple de réalisation, le boîtier comprend plusieurs disjoncteurs et le réarmeur RM couvre l'ensemble des disjoncteurs (BRK1-BRK6), permettant ainsi de réarmer tous les disjoncteurs inclus dans le boîtier simultanément.

Le réarmeur peut couvrir l'ensemble des disjoncteurs et réarmer tous les disjoncteurs inclus dans le boîtier simultanément.

L'invention a aussi pour objet corollaire un procédé de réarmement d'au moins un disjoncteur à réarmement manuel inclus dans un boîtier de distribution de tension secteur, selon la revendication 8.

Dans notre exemple de réalisation, le réarmement à distance consiste à utiliser au moins deux parties mécaniques, une première partie fixant ledit au moins un disjoncteur dans le boîtier, une deuxième partie ayant pour fonction de se déplacer dans le boîtier afin de réarmer ledit au moins un disjoncteur à distance.

Le procédé consiste par exemple à équiper la deuxième partie d'un réarmeur dont la surface couvre au moins ledit poussoir dudit au moins un disjoncteur, et en ce qu'il consiste à déplacer ce réarmeur par l'intermédiaire d'une tige poussoir dont l'une des extrémités est fixée au réarmeur et l'autre extrémité qui s étend à l'extérieur du boîtier.

Dans l'ensemble, la localisation des disjoncteurs à l'intérieur du boîtier et la possibilité de réarmer des disjoncteurs à distance apporte de nombreux avantages.

Un premier avantage est un gain de place sur la face accessible du boîtier de distribution ; l'invention permet ainsi d'accroître la capacité de distribution de tension secteur du boîtier de distribution, c'est-à-dire augmenter le nombre de prises secteur qu'il peut contenir pour alimenter les appareils électriques dans une armoire.

Un deuxième avantage est que l'armoire conserve une protection électrique optimale contre les défauts éventuels dans l'armoire.

L'invention a aussi pour gros avantages de donner un accès unique sur la face accessible du boîtier pour des raisons de facilité de maintenance et de sécurité.

Un autre avantage non négligeable est la facilité d'utilisation du boîtier de distribution.

Un autre avantage est la facilité de montage du boîtier de distribution entraînant un gain en temps lors de son montage.

Il en résulte une armoire informatique comprenant au moins un boîtier de distribution de tension secteur pour l'alimentation d'au moins un appareil électrique inclus dans l'armoire, ledit boîtier comprenant au moins un point P de distribution de l'alimentation, au moins une prise femelle sur sa surface destinée à recevoir une prise mâle d'un appareil électrique respectif, ledit point étant relié électriquement par l'intermédiaire d'un câble électrique respectif à au moins un disjoncteur réarmable manuellement, ledit au moins un disjoncteur comprenant un poussoir respectif pour son réarmement, un disjoncteur étant relié par l'intermédiaire d'un câble électrique respectif à au moins une prise, caractérisée en ce que le boîtier est celui défini précédemment.

L'invention sera mieux comprise à la lecture de la description qui suit donnée à titre d'exemple et faite en référence aux dessins annexés.

Dans les dessins
- La figure 1 une est une vue de face très schématique de l'ouverture constituant la face arrière d'une armoire informatique, montrant la face accessible du boîtier de distribution et les appareils électriques à alimenter en tension secteur.
- La figure 2 est une vue de dessus du boîtier de distribution montrant un exemple de réalisation de la présente invention.
- La figure 3 est une vue très schématique d'une partie du câblage d'une paire de prises et d'un disjoncteur à l'intérieur du boîtier de distribution montré à la figure 2.
- La figure 4 est une vue en perspective éclatée du mécanisme de réarmement montré à la figure 2.
- Les figures 5A et 5B sont des vues de dessus très grossières d'une variante du fonctionnement du mécanisme de réarmement montré à la figure 2 ; la figure 5A est une vue du mécanisme de réarment en état de repos ; la figure 5B est une vue du mécanisme de réarmement réalisant un réarmement des disjoncteurs par pression manuelle du bouton poussoir extérieur au boîtier de distribution.
- Les figures 6A et 6B sont des vues de dessus très grossières d'une autre variante du fonctionnement du mécanisme de réarmement montré à la figure 2 ; la figure 6A est une vue du mécanisme de réarment en état de repos ; la figure 6B est une vue du mécanisme de réarmement indiquant qu'un défaut est survenu dans un appareil électrique.
- La figure 7A est une vue de différents états d'un disjoncteur comprenant une fonction coupe-circuit ; les figures 7B, 7C et 7D illustrent un exemple de réalisation du mécanisme de réarmement réalisant cette fonction de coupe-circuit. La figure 7B illustre le mécanisme en état de repos. La figure 7C illustre l'état du mécanisme de réarmement indiquant qu'un défaut est survenu dans l'armoire. La figure 7D illustre l'état du mécanisme après un coupe-circuit.

Pour simplifier la description, dans les dessins les mêmes éléments portent les mêmes références.

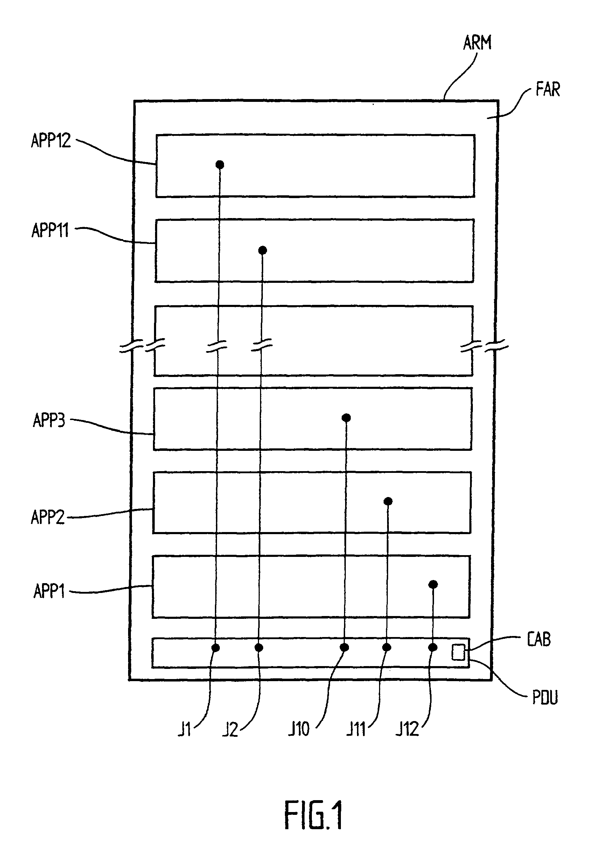

La figure 1 représente un exemple d'une armoire ARM dans laquelle la présente invention peut être mise en oeuvre.

Dans l'exemple choisi, cette armoire ARM a une forme paralélépipédique avec quatre faces verticales et deux faces horizontales. Deux des quatre faces verticales comportent une ouverture permettant l'accessibilité à l'intérieur de l'armoire. Une première ouverture, non représentée, constitue la face avant de l'armoire, et permettant à un utilisateur d'utiliser le volume de l'armoire en y insérant des appareils électriques.

Une deuxième ouverture FAR située sur la face de l'armoire ARM opposée à la première ouverture. Cette deuxième ouverture constitue la face arrière de l'armoire. Le câble électrique de chaque appareil est accessible sur cette face arrière.

L'intérieur de l'armoire ARM comprend au moins un appareil électrique APP1-APP12 à alimenter en tension.

L'intérieur de l'armoire comprend également au moins un boîtier de distribution PDU. Si les disques inclus dans les sous-systèmes de masse sont configurés selon la technologie RAID ou JBOD, l'armoire comprend deux boîtiers de distribution PDU assurant une redondance de l'alimentation dans l'armoire. En effet, dans cette configuration, pour des questions de redondance, chaque appareil a deux câbles de tension secteur.

De préférence, les appareils APP1-APP12 et le boîtier PDU ont une forme paralélépipédique et peuvent être insérés ou retirés de l'armoire ARM sous forme de tiroir. Une fois insérés dans l'armoire, les appareils APP1-APP12 et le boîtier PDU ont une de leurs faces qui reste accessible sur une face de l'armoire.

Le boîtier PDU comprend, sur sa face accessible, en entrée un câble CAB amenant une tension secteur. Dans l'exemple illustré, ce câble comprend une ligne de phase, une ligne de neutre et la masse raccordée à une prise de terre pour garantir la protection contre les chocs électriques et les surtensions. Le boîtier PDU comprend également en sortie, sur sa face accessible, au moins une prise femelle J1-J12 propre à recevoir une prise mâle du câble de l'appareil respectif APP1-APP12 inclus dans l'armoire.

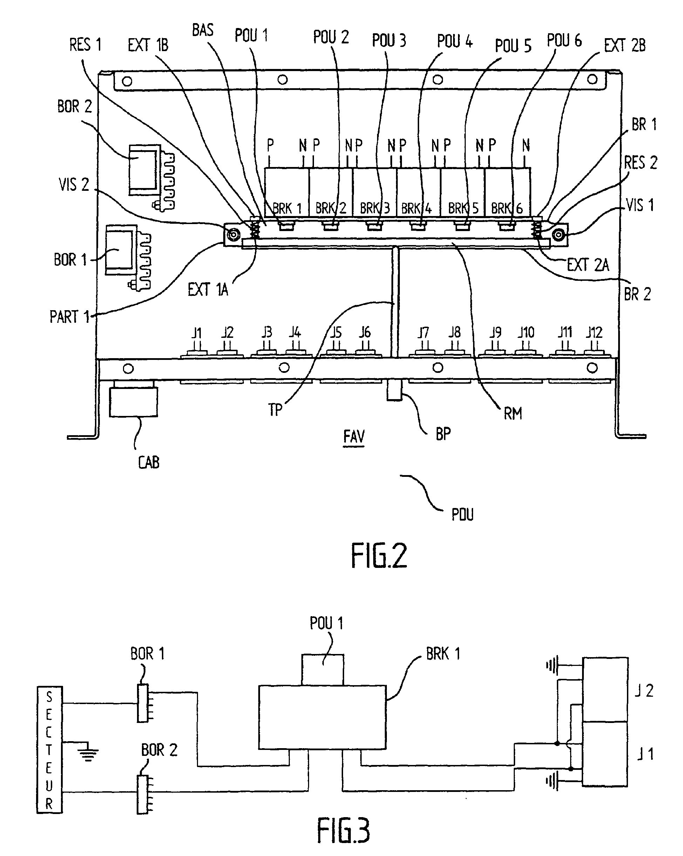

La figure 2 illustre un exemple de réalisation d'un boîtier de distribution PDU de tension secteur.

De préférence, la tension secteur est distribuée par l'intermédiaire d'au moins un bornier BOR1 et BOR2 situé à l'intérieur du boîtier. Dans l'exemple illustré, Le bornier BOR1 distribue la phase et le bornier BOR2 distribue le neutre. Concrètement, le bornier reçoit la ligne de neutre et distribue celle-ci vers au moins une prise femelle (J1-J12) via un disjoncteur (BRK1-BRK6) respectif. Le bornier recevant la tension de phase et distribuant cette tension vers au moins une prise femelle (J1-J12) via un disjoncteur respectif (BRK1-BRK6).

A noter que les disjoncteurs (BRK1-BRK6) choisis protègent à la fois la ligne de phase et la ligne de neutre (disjoncteurs doubles), cette caractéristique étant imposée pour l'utilisation aux US et au Canada (Standards internationaux).

Les disjoncteurs sont réarmables manuellement. Dans l'exemple illustré, un disjoncteur est un disjoncteur thermique de protection réarmable connu de l'homme du métier. Ce type de disjoncteur comprend un bouton poussoir POU1-POU6 incluant un ressort avec un coefficient de raideur. Si un disjoncteur disjoncte, il suffit d'appliquer une force suffisante sur ce bouton poussoir et le disjoncteur peut se réarmer manuellement. Il suffit donc de le pousser avec le doigt pour le réarmer (si, bien entendu, la cause qui avait entraîné le dépassement de courant a disparu ; si ce n'est pas le cas, le réarmement est impossible).

Le prix de revient d'un produit de distribution secteur étant fortement impacté par le prix des disjoncteurs et leur type (composants les plus chers de l'ensemble), il a été décidé de protéger les prises par paires. Dans l'exemple illustré, les prises femelles J1-J12 sont donc reliées entre elles par paires de façon à limiter le nombre de lignes de tension à l'intérieur du boîtier.

Ainsi, un disjoncteur suffit pour protéger deux prises femelles. Plus précisément, les six disjoncteurs BRK1-BRK6 seront donc utilises pour protéger les six paires de prises secteur respectives (J1-J2),(J3-J4),(J5-J6),(J7-J8),(J9-J10),(J11-J12).

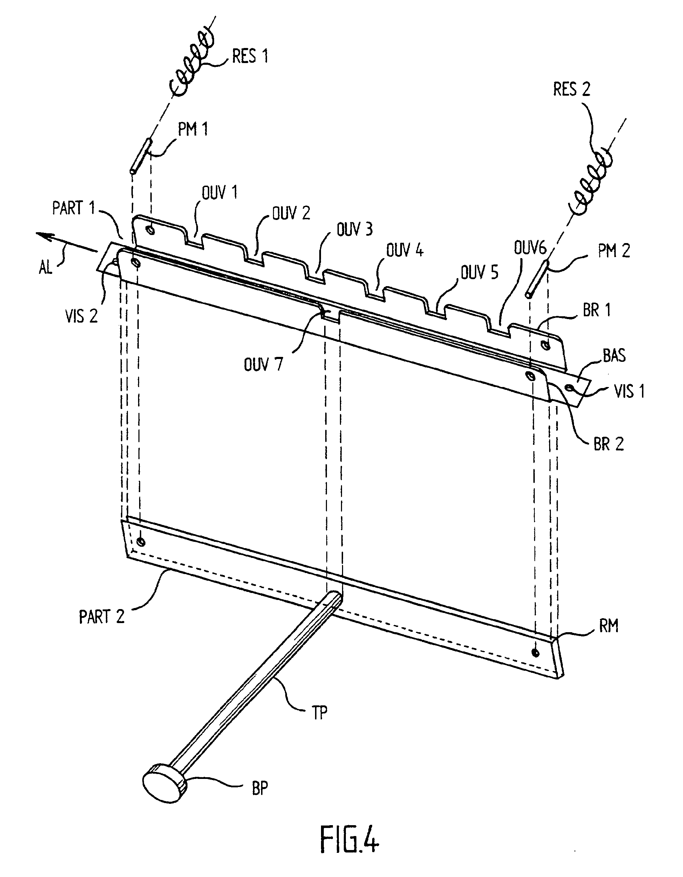

La figure 3 est un schéma électrique illustrant un exemple de réalisation du câblage à l'intérieur du boîtier de distribution PDU. Cette figure ne tient pas compte de la disposition des disjoncteurs par rapport aux borniers et prises femelles. De manière à ce que le dessin de la figure soit clair, on a représenté uniquement le câblage avec le disjoncteur BK1, le câblage avec les cinq autres disjoncteurs BRK2-BRK6 étant identique.

Dans l'exemple illustré, le boîtier comprend
- le câblage de distribution de la tension secteur en provenance du câble externe CAB et sa distribution sur les 6 disjoncteurs (BRK1-BRK6) par l'intermédiaire des borniers BOR1et BOR2,
- le câblage de chaque disjoncteur (BRK1-BRK6) vers sa paire de prises secteur respective (J1-J2),(J3-J4),(J5-J6),(J7-J8),(J9-J10),(J11-J12).
- et le câblage de la masse de la tension secteur et des prises femelles J1-J12.

Le gros problème est que le nombre de prises femelles et de disjoncteurs est limité sur la face accessible du boîtier de distribution. En conséquence, le nombre d'appareils à alimenter dans une armoire est limité.

A cet effet, le boîtier conforme à l'invention est caractérisé par la partie caractérisante de la revendication 1.

La figure 4 est une vue en perspective éclatée du mécanisme de réarmement montré à la figure 2.

Dans l'exemple illustré, le mécanisme de réarmement comprend deux parties mécaniques :
- la première partie mécanique PART1 est un support ayant pour fonction, notamment, de recevoir les disjoncteurs. Ce support a une section en forme de U avec une base BAS fixée, selon un axe longitudinal AL et par l'intermédiaire de vis VIS1 et VI2, sur une des faces horizontales du boîtier. Ce support comprend deux ailes BR1 et BR2 perpendiculaires à la base BAS. Une première aile comprend des ouvertures OUV1-OUV6, par exemple des encoches, pratiquées à pas régulier en nombre égal au moins au nombre de disjoncteur BRK1-BRK6 à installer dans le boîtier. Ces ouvertures OUV1-OUV6 ont pour fonction de recevoir le poussoir POU1-POU6 de chaque disjoncteur respectif BRK1-BRK6. L'aile BR1 assure un alignement des poussoirs POU1-POU6 de l'ensemble des disjoncteurs. On suppose que l'épaisseur de cette aile est suffisamment fine pour que chaque poussoir POU1-POU6, ou une partie de celui-ci, de chaque disjoncteur respectif BRK1-BRK6 soit à l'intérieur du support.
   La seconde aile BR2 comprend, dans l'exemple illustré, une ouverture, OUV7 en son milieu. Cette ouverture peut être une encoche. Cette ouverture est propre à recevoir la deuxième partie mécanique du mécanisme de réarmement.
- La deuxième partie mécanique PART2 comprend
   - un réarmeur RM de surface plane et dont la surface peut couvrir au moins l'ensemble des poussoirs des disjoncteurs BRK1-BRK6,
   - une tige poussoir TP,
   - et un bouton poussoir BP.

La tige poussoir relie le réarmeur et le bouton poussoir et constitue un ensemble mécanique solidaire. De préférence, le réarmeur RM est perpendiculaire à la tige poussoir TP. Le réarmeur est installé, selon l'axe longitudinal, dans la partie vide du support. De préférence, le plan constitué par le réarmeur est parallèle aux plans constitués par les ailes BR1 et BR2. La tige poussoir TP est supportée par l'intermédiaire de l'ouverture OUV7 et a une longueur telle que le bouton poussoir ressort du boîtier par une ouverture pratiquée sur la face accessible de ce boîtier. Dans l'exemple illustré, cette dernière ouverture se situe entre deux paires de prises électriques femelles.

Le réarmeur RM peut se déplacer dans la partie vide entre les deux ailes du support. Ce déplacement s'effectue en exerçant une force sur le bouton poussoir BP extérieur au boîtier PDU.

Le déplacement du réarmeur RM s'effectue selon un axe transversal. De façon à consolider l'assemblage des deux parties mécaniques PART1 et PART2 et à assurer un déplacement transversal de la deuxième partie mécanique, celle-ci est guidée dans son mouvement par l'intermédiaire d'au moins une pièce métallique PM1 et PM2 fixées selon un axe transversal sur le support. Plus précisément, une extrémité de la pièce PM1 est fixée sur une première aile du support et l'autre extrémité sur l'autre aile du support. Des trous sont pratiqués aux extrémités du réarmeur RM de telle sorte le réarmeur est guidé par les pièces respectives PM1 et PM2.

Le mécanisme comporte des ressorts respectifs RES1 et RES2 dont une des extrémités respective EXT1A et EXT2A est solidaire du réarmeur RM et l'autre extrémité respective EXT1B et EXT2B est solidaire de l'aile BR1. De préférence, les ressort RES1 et RES 2 ont un coefficient de raideur identique égal à K1. De même, les ressorts intégrés dans le poussoir des disjoncteurs BRK1-BRK6 ont tous un même coefficient de raideur K2.

Dans l'exemple illustré, de façon à assurer un bon fonctionnement des ressorts, l'axe transversal des ressorts RES1 et RES2 est confondu avec l'axe transversal des pièces métalliques respectives PM1 et PM2.

Quand aucune panne ne survient dans l'armoire, tous les disjoncteurs sont en état de marche et ne nécessitent pas d'être réarmés. Les réarmeurs RM1 et RM2 doivent alors être à une distance suffisante des poussoirs des disjoncteurs. Pour assurer cette condition (condition 1) de distance, La somme des coefficients de raideur des ressorts RES1 et RES2 doit être supérieur à la somme des coefficients de raideur de l'ensemble des ressorts intégrés dans les disjoncteurs.

Quand au moins un disjoncteur disjoncte suite à une panne survenue dans un appareil de l'armoire, le réarmement d'un disjoncteur est réalisé en actionnant le poussoir BP qui se situe sur la face accessible du boîtier PDU. Le réarmement peut être réalisé manuellement en actionnant le poussoir BP avec son doigt. Cet actionnement provoque un mouvement transversal du réarmeur RM.

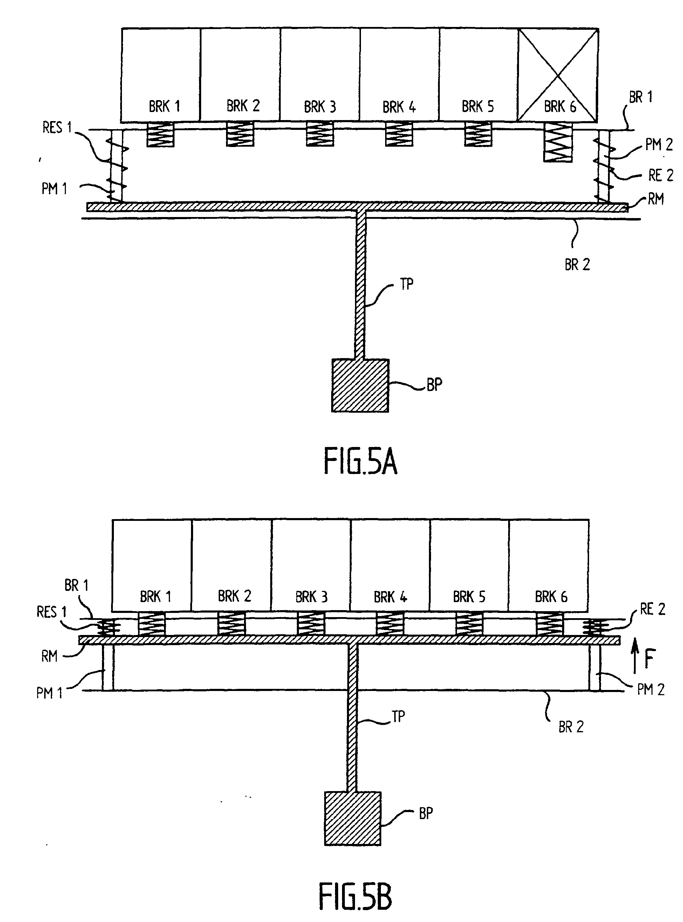

Les figures 5A et 5B illustre l'évolution du déplacement du réarmeur RM entre les deux ailes BR1 et BR2 du support de fixation.

La figure 5A illustre l'état du réarmeur RM à l'instant initial. Cet instant correspond, par exemple, à un défaut survenu sur l'appareil protégé électriquement par le disjoncteur BRK6. Sur la figure 5A, une croix dans le disjoncteur BRK6 montre que celui-ci a disjoncté.

La figure 5B illustre l'étape qui consiste à réarmer le disjoncteur BRK6. Le réarmement consiste
- à exercer une pression sur le poussoir, par exemple par l'intermédiaire de son doigt. La partie solidaire constituée par le bouton poussoir, la tige et le réarmeur se déplace transversalement entre les deux ailes, de l'aile BR2 vers l'aile BR1. Une flèche F sur la figure indique le sens du déplacement du réarmeur. Les deux pièces métalliques PM1 et PM2 guident le réarmeur RM dans son déplacement transversal.

Au cours du déplacement du réarmeur RM, les deux ressorts RES1 et RES2 se compriment progressivement jusqu'à ce que le réarmeur RM soit en contact avec les poussoirs. Le réarmeur RM réarme le disjoncteur BRK6 en comprimant les ressorts intégrés aux disjoncteurs.

Naturellement, dans cet exemple de réalisation, la longueur de la tige poussoir TP est supérieure à la distance qui sépare les ailes BR1 et BR2.

Bien entendu, l'invention ne se limite pas à l'exemple de réalisation du mécanisme de réarmement qui a été décrit ci-dessus a titre d'exemple. Elle embrasse, au contraire, toutes les variantes de réalisation et d'application respectant le même principe.

En particulier, on ne s'éloignerait pas du cadre de l'invention en modifiant le mécanisme de réarmement, lequel peut être divisé en plusieurs réarmeurs RM et plusieurs tiges poussoirs et boutons poussoirs associés. Selon cette variante, il est possible de définir des commandes de disjoncteurs soit individuelles, soit par plus petits groupes. Cela augmenterait le coût mais permettrait de répondre à des applications spécifiques.

On ne s'éloignerait pas du cadre de l'invention en modifiant les formes des deux parties mécaniques décrites ci-dessus. Par exemple, la première partie mécanique constituée par le support en U pourrait avoir une base en forme de V au lieu d'être selon un axe longitudinal. En conséquence, le réarmeur est aussi en forme de V. Il est toujours possible d'imaginer d'autres types de réalisation du mécanisme de réarmement, le paramètre quantité de produits à fabriquer pouvant influer sur le choix d'une réalisation plutôt qu'une autre. Par contre, quel que soit le mécanisme choisi, la contrainte primordiale est que le dispositif doit être parfaitement fiable mécaniquement (pas de coincement possible), car les disjoncteurs sont des éléments de sécurité.

On pourrait également, selon une autre variante, substituer la tige poussoir TP et le bouton poussoir BP à un mécanisme électrique pouvant commander à distance le réarmeur RM. Cette commande électrique pourrait se situer sur la face accessible du boîtier de distribution.

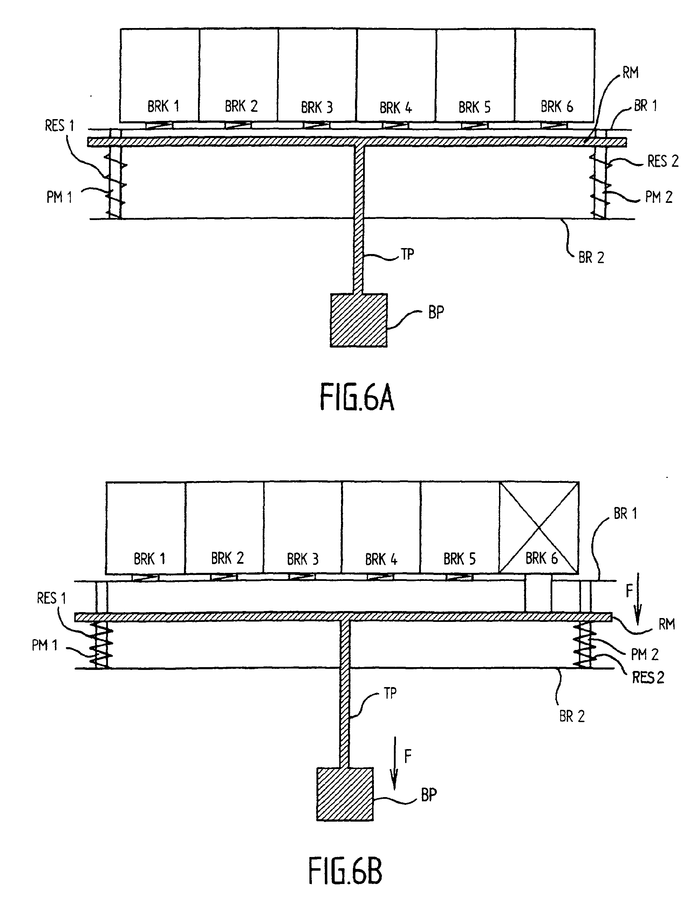

Le choix du mécanisme de réarmement est aussi fonction du choix du type de disjoncteur utilisé. Par exemple, le disjoncteur peut comprendre un poussoir montrant par son état (affleurant ou sorti) si une disjonction a eu lieu (sorti) et permettant le ré-enclenchement par pression sur le poussoir. Le bouton poussoir est extrait par l'intermédiaire d'un ressort inclus dans le poussoir du disjoncteur lorsque celui-ci est disjoncté (vision par l'utilisateur du défaut). Les figures 6A et 6B sont des vues de dessus très grossières du fonctionnement du mécanisme de réarmement illustrant cette variante.

Sur la figure 6A, le réarmeur RM est situé à proximité des poussoirs. Les ressorts RES1 et RES2 ont pour fonction de maintenir le réarmeur à proximité des poussoirs POU1-POU6. Si un disjoncteur disjoncte, le poussoir associé à ce disjoncteur est extrait entraînant un déplacement du réarmeur dans son mouvement.

La figure 6B illustre l'état du réarmeur après qu'un disjoncteur ait disjoncté. Dans cet exemple, le disjoncteur BR6 a disjoncté. Une flèche sur la figure indique le sens du déplacement du réarmeur suite à un défaut. A fortiori, les parties solidaires du réarmeur RM, à savoir la tige poussoir TP et le bouton poussoir BP se déplacent également. Le déplacement du bouton poussoir BP étant visible de l'extérieur, l'utilisateur se trouvant devant l'armoire est alors informé qu'un défaut est survenu dans l'armoire.

Naturellement, si un défaut apparaît dans un appareil, le système de ressort intégré au poussoir du disjoncteur doit être capable d'exercer une force suffisante pour déplacer le réarmeur RM.

Naturellement, une autre variante possible aurait été d'avoir autant de disjoncteurs que de prises. Le résultat étant toutefois une augmentation substantielle du prix de revient sans en tirer un intérêt évident. Cela n'aurait pas toutefois d'impact sur l'originalité de l'invention qui est indépendante du nombre de disjoncteurs.

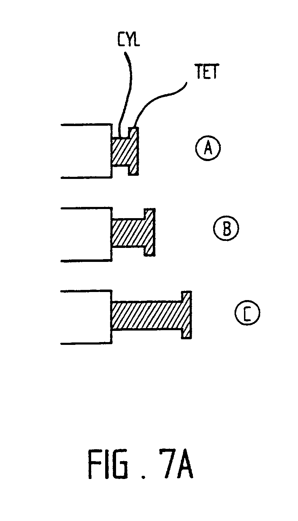

Un autre exemple de réalisation possible de l'invention serait de définir le produit avec une fonction coupe-circuit additionnelle. Dans ce cas, les disjoncteurs seraient choisis avec cette fonction. La figure 7A illustre les différentes positions d'un poussoir d'un tel disjoncteur. Un tel disjoncteur peut avoir trois états :
- un premier état caractéristique d'un état normal (le poussoir est dans une position A enfoncée)
- un deuxième état caractéristique d'un état de défaut (le poussoir est dans une position B intermédiaire)
- et un troisième état caractéristique d'un coupe-circuit (le poussoir est dans une position C) d'extraction maximale. Cette extraction est réalisée manuellement.

Selon cet exemple, les poussoirs des disjoncteurs comprennent une partie cylindrique CYL dont une extrémité est enfoncée dans le disjoncteur. L'autre extrémité comporte une tête cylindrique TET avec un diamètre supérieur au diamètre de la partie cylindrique CYL. Selon cet exemple, Le mécanisme est conçu de telle manière à pouvoir extraire, par l'intermédiaire du poussoir BP, le poussoir des disjoncteurs dans une position d'extraction maximale. Selon cet exemple, la partie mécanique PART1 est identique aux exemples précédents. A l'inverse, le réarmeur RM comprend une base BAS2 et deux ailes BR3 et BR4. L'ensemble constitué par l'aile BAS2 et les deux ailes BR3 et BR4 constitue un ensemble solidaire pouvant se déplacer dans la partie mécanique PART1 de la même façon que décrit précédemment aux figures 6A et 6B. L'aile BR3 située en face des disjoncteurs comprend des ouvertures (ou encoches) propre à recevoir la tête cylindrique des poussoirs de l'ensemble des disjoncteurs. Le poussoir peut donc être entraîné dans son mouvement lorsque le réarmeur RM se déplace.

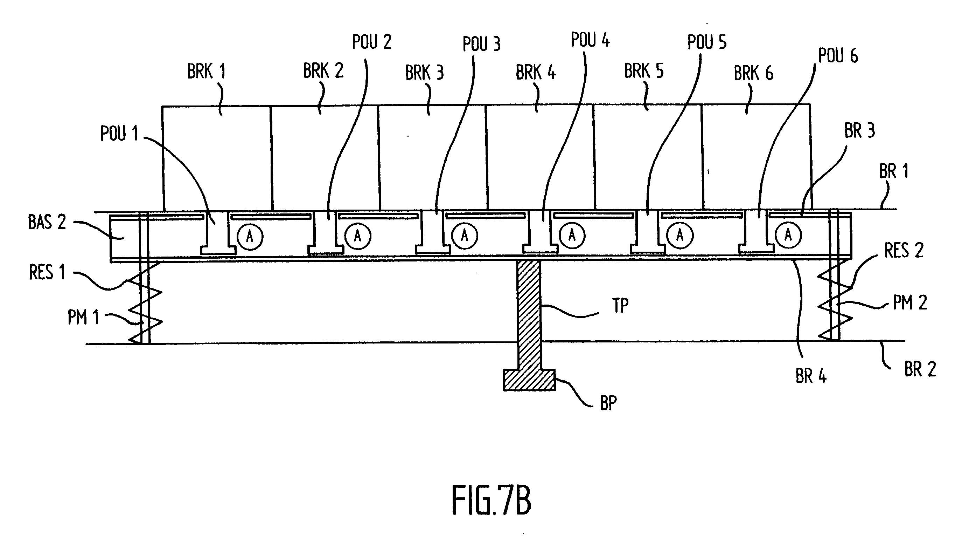

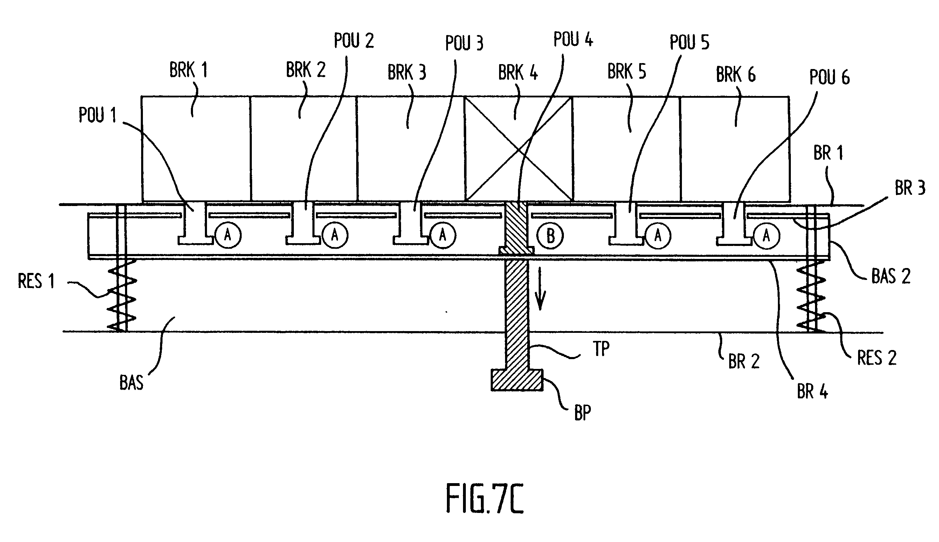

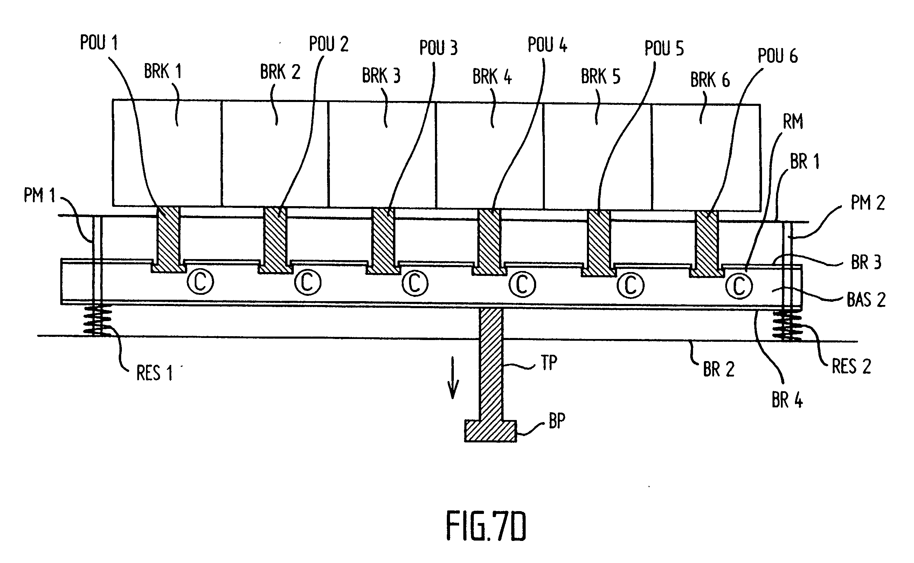

On se réfère aux figures 7B, 7C et 7D illustrant un exemple de réalisation du mécanisme de réarmement réalisant cette fonction de coupe-circuit.

La figure 7B illustre le mécanisme en état de repos. Les disjoncteurs sont à l'état A.

La figure 7C illustre l'état du mécanisme de réarmement indiquant qu'un défaut est survenu dans l'armoire. Dans l'exemple illustré, le disjoncteur BRK4 disjoncte. Tous les disjoncteurs sont dans l'état A, sauf le disjoncteur BR4 qui se trouve dans l'état B. Le poussoir POU4 du disjoncteur BRK4 sort du disjoncteur et entraîne dans son mouvement l'aile BR4 du réarmeur RM. Pour le bon fonctionnement d'un tel mécanisme, une condition est que la détente du poussoir des disjoncteurs soit au moins égale à la distance qui sépare les deux ailes BR3 et BR4 ou inversement. De même la condition 1 énoncée précédemment doit aussi être respectée.

La figure 7D illustre l'état du mécanisme après avoir réalisé la fonction de coupe-circuit. Pour réaliser un coupe circuit, l'utilisateur tire manuellement le réarmeur RM par l'intermédiaire du bouton poussoir BP situé à l'extérieur du boîtier (une flèche sur la figure 7D montre le sens du mouvement du réarmeur pour réaliser un coupe-circuit). Le déplacement du bouton poussoir BP et de l'aile BR3 entraîne dans son mouvement les têtes des disjoncteurs. Tous les disjoncteurs sont dans un état C. A cet instant, l'utilisateur peut relâcher le bouton poussoir BP à l'extérieur, et les ressorts RES1 et RES2 exercent une force de rappel telle que le réarmeur se déplace dans la partie mécanique PART 1 en direction des disjoncteurs. De préférence, la force de rappel est telle que l'aile BR4 se déplace jusqu'aux têtes des disjoncteurs qui se trouvent en position d'extraction maximale (la condition 1 doit être respectée).

L'invention a été développée dans le cas d'un boîtier de distribution de tension secteur pour armoire de 19 pouces. Bien entendu, cela peut adresser d'autres utilisations de distribution d'alimentations de courants alternatifs ou continus dans des cas d'emploi ou la place en face accessible est limitée.

L'invention peut également s'appliquer à tout boîtier dont les disjoncteurs de protection sont positionnés à distance d'une face accessible sans avoir de prises de distribution associées (câblage direct).

## Revendications

1. Boîtier de distribution (PDU) de tension secteur pour l'alimentation d'au moins un appareil électrique (APP1-APP12), le boîtier comprenant au moins un point (P) de distribution de l'alimentation, au moins une prise femelle (J1-J12) sur sa surface destinée à recevoir une prise mâle d'un câble d'un appareil électrique (APP1-APP12), ledit point (P) étant relié électriquement par l'intermédiaire d'un câble électrique respectif à au moins un disjoncteur (BRK1-BRK6) réarmable manuellement, ledit au moins un disjoncteur comprenant un poussoir respectif (POU1-POU6) pour son réarmement, un disjoncteur (BRK1-BRK6) étant relié par l'intermédiaire d'un câble électrique respectif à ladite au moins une prise femelle (J1-J12), ledit au moins un disjoncteur (BRK1-BRK6) étant situé à l'intérieur du boîtier, et comprenant au moins un mécanisme de réarmement propre à réarmer ledit au moins un disjoncteur, **caractérisé en ce que** le poussoir (POU1-POU6) d'un disjoncteur comprend un ressort propre à éjecter le poussoir en cas de défaut électrique, et **en ce que** le poussoir entraîne le mécanisme de réarmement dans son mouvement, le déplacement du mécanisme de réarmement sur la face accessible du boîtier étant visible à l'extérieur du boîtier indiquant qu'un défaut électrique est survenu dans une armoire (ARM).

2. Boîtier selon la revendication 1, **caractérisé en ce que** le mécanisme de réarmement comprend deux parties
- une première partie mécanique fixant ledit au moins un disjoncteur (BRK1-BRK6) à l'intérieur du boîtier,
- une deuxième partie comprenant au moins un réarmeur (RM) propre à réarmer ledit au moins un disjoncteur à distance.

3. Boîtier selon la revendication 2, **caractérisé en ce que** le réarmeur (RM) est associé à un moyen de commande ayant pour fonction de commander le déplacement du réarmeur (RM) qui lui est associé à l'intérieur du boîtier.

4. Boîtier selon l'une des revendications 1 à 3, **caractérisé en que** la deuxième partie comprend une tige poussoir (TP) liée à une de ses extrémités au réarmeur (RM), son autre extrémité se prolongeant à l'extérieur du boîtier au travers d'une ouverture pratiquée sur la face accessible du boîtier.

5. Boîtier selon l'une des revendications 2 à 4, **caractérisé en ce que** le réarmeur (RM) est maintenu éloigné du poussoir (POU1-POU6) dudit au moins un disjoncteur par l'intermédiaire d'au moins un ressort (RES1, RES2), **en ce que** le réarmement dudit au moins un disjoncteur s'effectue en comprimant ledit au moins un ressort (RES1, RES2) jusqu'à ce que le poussoir dudit au moins un disjoncteur s'enfonce et réarme le disjoncteur.

6. Boîtier selon l'une des revendications 1 à 5, **caractérisé en ce qu'**un disjoncteur protège un appareil électrique respectif de l'armoire, **en ce que** chaque disjoncteur est associé à un mécanisme de réarmement de façon à identifier l'appareil électrique sur lequel est survenue la panne.

7. Boîtier selon l'une des revendications 2 à 6, **caractérisé en ce qu'**il comprend plusieurs disjoncteurs (BRK1-BRK6), **en ce que** le réarmeur (RM) couvre l'ensemble des disjoncteurs (BRK1-BRK6) de façon à réarmer tous les disjoncteurs inclus dans le boîtier simultanément.

8. Procédé de réarmement d'au moins un disjoncteur à réarmement manuel inclus dans un boîtier de distribution (PDU) de tension secteur, ledit boîtier comprenant au moins un point P de distribution de l'alimentation et au moins une prise femelle (J1-J12) sur sa surface destinée à recevoir une prise mâle respective d'un appareil électrique (APP1-APP12), ledit point (P) étant relié électriquement par l'intermédiaire d'un câble électrique respectif à au moins un disjoncteur (BRK1-BRK6), ledit au moins un disjoncteur comprenant un poussoir respectif (POU1-POU6) pour son réarmement, un disjoncteur (BRK1-BRK6) étant relié par l'intermédiaire d'un câble électrique respectif à au moins une prise femelle (J1-J12), ledit au moins un disjoncteur (BRK1-BRK6) étant placé à l'intérieur du boîtier, **caractérisé en ce qu'**il consiste à visualiser un défaut électrique par l'intermédiaire d'un ressort installé dans le poussoir (POU1-POU6) de chaque disjoncteur, le ressort étant propre à éjecter le poussoir en cas de défaut électrique, le poussoir entraînant une tige poussoir (TP) dans son mouvement, le déplacement de la tige (TP) étant visible sur la face accessible du boîtier indiquant qu'un défaut électrique est survenu dans une armoire (ARM);

9. Procédé selon la revendication 8, **caractérisé en ce que** le réarmement à distance consiste à utiliser au moins deux parties mécaniques (PART1, PART2), l'une (PART1) fixant ledit au moins un disjoncteur (BRK1-BRK6) dans le boîtier (PDU), l'autre (PART2) ayant pour fonction de se déplacer dans le boîtier (PDU) afin de réarmer ledit au moins un disjoncteur (BRK1-BRK6) à distance.

10. Procédé selon la revendication 8 ou 9, **caractérisé en ce qu'**il consiste à équiper la partie (PART2) d'un réarmeur (RM) dont la surface couvre au moins ledit poussoir dudit au moins un disjoncteur, et **en ce qu'**il consiste à déplacer ce réarmeur (RM) par l'intermédiaire de la tige poussoir (TP) dont l'une des extrémités est fixée au réarmeur (RM) et l'autre extrémité qui s étend à l'extérieur du boîtier (PDU).

11. Armoire informatique (ARM) comprenant au moins un boîtier de distribution (PDU) de tension secteur pour l'alimentation d'au moins un appareil électrique (APP1-APP12) inclus dans l'armoire, ledit boîtier comprenant au moins un point P de distribution de l'alimentation et au moins une prise femelle (J1-J12) sur sa surface destinée à recevoir une prise mâle d'un appareil électrique respectif (APP1-APP12), ledit point (P) étant relié électriquement par l'intermédiaire d'un câble électrique respectif à au moins un disjoncteur (BRK1-BRK6) réarmable manuellement, ledit au moins un disjoncteur comprenant un poussoir respectif (POU1-POU6) pour son réarmement, un disjoncteur (BRK1-BRK6) étant relié par l'intermédiaire d'un câble électrique respectif à au moins une prise femelle (J1-J12), **caractérisée en ce que** le boîtier (PDU) est celui défini dans l'une des revendications 1 à 7.

## Claims

1. Distribution unit (PDU) for mains voltage for supplying at least one electrical apparatus (APP1-APP12), the unit comprising at least one distribution point (P) for the power supply, at least one socket (J1-J12) on its surface intended to receive a plug on a cable of an electrical apparatus (APP1-APP12), said point (P) being electrically connected via a respective electric cable to at least one manually resettable circuit breaker (BRK1-BRK6), said at least one circuit breaker comprising a respective pushbutton (POU1-POU6) for resetting it, a circuit breaker (BRK1-BRK6) being connected via a respective electric cable to said at least one socket (J1-J12), said at least one circuit breaker (BRK1-BRK6) being located inside the unit, and comprising at least one resetting mechanism capable of resetting said at least one circuit breaker, **characterised in that** the pushbutton (POU1-POU6) of a circuit breaker comprises a spring capable of ejecting the pushbutton in the event of an electric fault, and **in that** the pushbutton drives the movement of the resetting mechanism, the displacement of the resetting mechanism on the accessible face of the unit being visible outside the unit indicating that an electric fault has occurred in a cabinet (ARM).

2. Unit according to Claim 1, **characterised in that** the resetting mechanism comprises two parts
- a first mechanical part fixing said at least one circuit breaker (BRK1-BRK6) inside the unit,
- a second part comprising at least one resetter (RM) capable of resetting said at least one remote circuit breaker.

3. Unit according to Claim 2, **characterised in that** the resetter (RM) is associated with a control means having the function of controlling the displacement of the resetter (RM) that is associated with it inside the unit.

4. Unit according to one of Claims 1 to 3, **characterised in that** the second part comprises a push rod (TP) connected at one of its ends to the resetter (RM), its other end being extended out of the unit through an opening made on the accessible face of the unit.

5. Unit according to one of Claims 2 to 4, **characterised in that** the resetter (RM) is kept at a distance from the pushbutton (POU1-POU6) of said at least one circuit breaker via at least one spring (RES1, RES2), **in that** the resetting of said at least one circuit breaker is carried out by compressing said at least one spring (RES1, RES2) until the pushbutton of said at least one circuit breaker is pressed in and resets the circuit breaker.

6. Unit according to one of Claims 1 to 5, **characterised in that** a circuit breaker protects a respective electrical apparatus of the cabinet, **in that** each circuit breaker is associated with a resetting mechanism in order to identify the electrical apparatus on which the failure occurred.

7. Unit according to one of Claims 2 to 6, **characterised in that** it comprises several circuit breakers (BRK1-BRK6), **in that** the resetter (RM) covers all the circuit breakers (BRK1-BRK6) so as to reset all the circuit breakers included in the unit simultaneously.

8. Method of resetting of at least one circuit breaker with manual resetting included in a distribution unit (PDU) for mains voltage, said unit comprising at least one distribution point P for the power supply and at least one socket (J1-J12) on its surface intended to receive a respective plug of an electrical apparatus (APP1-APP12), said point (P) being connected electrically via a respective electric cable to at least one circuit breaker (BRK1-BRK6), said at least one circuit breaker comprising a respective pushbutton (POU1-POU6) for resetting it, a circuit breaker (BRK1-BRK6) being connected via a respective electric cable to at least one socket (J 1-J 12), said at least one circuit breaker (BRK1-BRK6) being placed inside the unit, **characterised in that** it consists in displaying an electric fault via a spring installed in the pushbutton (POU1-POU6) of each circuit breaker, the spring being capable of ejecting the pushbutton in the event of an electric fault, the pushbutton driving the movement of a push rod (TP), the displacement of stem (TP) being visible on the accessible face of the unit indicating that an electric fault has occurred in a cabinet (ARM).

9. Method according to Claim 8, **characterised in that** remote resetting consists in using at least two mechanical parts (PART1, PART2), one (PART1) fixing said at least one circuit breaker (BRK1-BRK6) in the unit (PDU), the other (PART2) having the function of being displaced in the unit (PDU) so as to reset said at least one circuit breaker (BRK1-BRK6) remotely.

10. Method according to Claim 8 or 9, **characterised in that** it consists in fitting the part (PART2) of a resetter (RM), the surface of which covers at least said pushbutton of said at least one circuit breaker, and **in that** it consists in displacing this resetter (RM) via the push rod (TP), one of the ends of which is fixed to the resetter (RM) and the other end of which extends outside the unit (PDU).

11. Data-processing cabinet (ARM) comprising at least one distribution unit (PDU) for mains voltage for supplying at least one item of electrical apparatus (APP1-APP12) included in the cabinet, said unit comprising at least one distribution point P for power supply and at least one socket (J1-J12) on its surface intended to receive a plug for a respective electrical apparatus (APP1-APP12), said point (P) being connected electrically via a respective electric cable to at least one manually resettable circuit breaker (BRK1-BRK6), said at least one circuit breaker comprising a respective pushbutton (POU1-POU6) for resetting it, a circuit breaker (BRK1-BRK6) being connected via a respective electric cable to at least one socket (J1-J12), **characterised in that** the unit (PDU) is that defined in one of Claims 1 to 7.

## Patentansprüche

1. Gehäuse (PDU) zur Verteilung der Netzspannung für die Versorgung von mindestens einem elektrischen Gerät (APP1-APP12), wobei das Gehäuse mindestens eine Stelle (P) zur Verteilung der Versorgung und mindestens eine Buchse (J1-J12) an seiner Oberfläche aufweist, die einen Stecker eines Kabels eines elektrischen Geräts (APP1-APP12) aufnehmen soll, wobei die Stelle (P) über ein zugeordnetes elektrisches Kabel mit mindestens einem manuell rückstellbaren Unterbrecher (BRK1-BRK6) elektrisch verbunden ist, der mindestens eine Unterbrecher einen zugeordneten Drücker (POU1-POU6) für seine Rückstellung aufweist, ein Unterbrecher (BRK1-BRK6) über ein zugeordnetes elektrisches Kabel mit der mindestens einen Buchse (J1-J12) verbunden ist, der mindestens eine Unterbrecher (BRK1-BRK6) im Gehäuse angeordnet ist und das Gehäuse auch mindestens einen Rückstellmechanismus aufweist, der den mindestens einen Unterbrecher rückstellen kann, **dadurch gekennzeichnet, dass** der Drücker (POU1-POU6) eines Unterbrechers eine Feder aufweist, die den Drücker bei einer elektrischen Störung ausstoßen kann, und dass der Drücker den Rückstellmechanismus bei seiner Bewegung mitnimmt, wobei die Verlagerung des Rückstellmechanismus an der zugänglichen Seite des Gehäuses außerhalb des Gehäuses sichtbar ist und angibt, das eine elektrische Störung in einem Schrank (ARM) aufgetreten ist.

2. Gehäuse nach Anspruch 1, **dadurch gekennzeichnet, dass** der Rückstellmechanismus zwei Teile aufweist:
- einen ersten, mechanischen Teil, der den mindestens einen Unterbrecher (BRK1-BRK6) im Gehäuse befestigt,
- einen zweiten Teil, der mindestens eine Rückstelleinrichtung (RM) aufweist, die den mindestens einen Unterbrecher aus einer beabstandeten Position rückstellen kann.

3. Gehäuse nach Anspruch 2, **dadurch gekennzeichnet, dass** die Rückstelleinrichtung (RM) einem Steuermittel zugeordnet ist, dessen Funktion darin besteht, die Verlagerung der ihm zugeordneten Rückstelleinrichtung (RM) im Gehäuse zu steuern.

4. Gehäuse nach einem der Ansprüche 1 bis 3, **dadurch gekennzeichnet, dass** der zweite Teil eine Druckstange (TP) aufweist, die an einem ihrer Enden mit der Rückstelleinrichtung (RM) verbunden ist, wobei ihr anderes Ende sich durch eine an der zugänglichen Seite des Gehäuses ausgebildete Öffnung hindurch außerhalb des Gehäuses erstreckt.

5. Gehäuse nach einem der Ansprüche 2 bis 4, **dadurch gekennzeichnet, dass** die Rückstelleinrichtung (RM) durch mindestens eine Feder (RES1, RES2) so gehalten ist, dass sie von dem Drücker (POU1-POU6) des mindestens einen Unterbrechers beabstandet ist, und dass das Rückstellen des mindestens einen Unterbrechers **dadurch** erfolgt, dass die mindestens eine Feder (RES1, RES2) solange zusammengedrückt wird, bis der Drücker des mindestens einen Unterbrechers eingedrückt ist und den Unterbrecher rückstellt.

6. Gehäuse nach einem der Ansprüche 1 bis 5, **dadurch gekennzeichnet, dass** ein Unterbrecher ein zugeordnetes elektrisches Gerät des Schranks schützt und jeder Unterbrecher einem Rückstellmechanismus zugeordnet ist, so dass das elektrische Gerät, bei dem der Störfall aufgetreten ist, erkennbar ist.

7. Gehäuse nach einem der Ansprüche 2 bis 6, **dadurch gekennzeichnet, dass** es mehrere Unterbrecher (BRK1-BRK6) aufweist und die Rückstelleinrichtung (RM) die Gesamtheit der Unterbrecher (BRK1-BRK6) abdeckt, so dass alle im Gehäuse vorhandenen Unterbrecher gleichzeitig rückgestellt werden.

8. Verfahren zum Rückstellen mindestens eines Unterbrechers mit manueller Rückstellung, der sich in einem Gehäuse (PDU) zur Verteilung der Netzspannung befindet, wobei das Gehäuse mindestens eine Stelle (P) zur Verteilung der Versorgung und mindestens eine Buchse (J1-J12) an seiner Oberfläche aufweist, die einen zugeordneten Stecker eines elektrischen Geräts (APP1-APP12) aufnehmen soll, wobei die Stelle (P) über ein zugeordnetes elektrisches Kabel mit mindestens einem Unterbrecher (BRK1-BRK6) elektrisch verbunden ist, der mindestens eine Unterbrecher einen zugeordneten Drücker (POU1-POU6) für seine Rückstellung aufweist, ein Unterbrecher (BRK1-BRK6) über ein zugeordnetes elektrisches Kabel mit mindestens einer Buchse (J1-J12) verbunden ist und der mindestens eine Unterbrecher (BRK1-BRK6) im Gehäuse angeordnet ist, **dadurch gekennzeichnet, dass** es darin besteht, eine elektrische Störung durch eine Feder anzuzeigen, welche im Drücker (POU1-POU6) jedes Unterbrechers angeordnet ist, wobei die Feder den Drücker bei einer elektrischen Störung ausstoßen kann, wobei der Drücker bei seiner Bewegung eine Druckstange (TP) mitnimmt, wobei die Verlagerung der Stange (TP) an der zugänglichen Seite des Gehäuses sichtbar ist und angibt, dass eine elektrische Störung in einem Schrank (ARM) aufgetreten ist.

9. Verfahren nach Anspruch 8, **dadurch gekennzeichnet, dass** das Rückstellen aus einer beabstandeten Position darin besteht, mindestens zwei mechanische Teile (PART1, PART2) zu verwenden, wobei ein Teil (PART1) den mindestens einen Unterbrecher (BRK1-BRK6) im Gehäuse (PDU) befestigt und der andere Teil (PART2) die Funktion hat, sich im Gehäuse (PDU) zu verlagern, um den mindestens einen Unterbrecher (BRK1-BRK6) aus einer beabstandeten Position rückzustellen.

10. Verfahren nach Anspruch 8 oder 9, **dadurch gekennzeichnet, dass** es darin besteht, den Teil (PART2) mit einer Rückstelleinrichtung (RM) auszustatten, dessen Oberfläche wenigstens den Drücker des mindestens einen Unterbrechers abdeckt, und dass es darin besteht, diese Rückstelleinrichtung (RM) über die Druckstange (TP) zu verlagern, bei welcher eines der Enden an der Rückstelleinrichtung (RM) befestigt ist und das andere Ende sich außerhalb des Gehäuses (PDU) erstreckt.

11. EDV-Schrank (ARM) mit mindestens einem Gehäuse (PDU) zur Verteilung der Netzspannung für die Versorgung mindestens eines im Schrank angeordneten elektrischen Geräts (APP1-APP12), wobei das Gehäuse mindestens eine Stelle (P) zur Verteilung der Versorgung und mindestens eine Buchse (J1-J12) an seiner Oberfläche aufweist, die einen Stecker eines zugeordneten elektrischen Geräts (APP1-APP12) aufnehmen soll, wobei die Stelle (P) über ein zugeordnetes elektrisches Kabel mit mindestens einem manuell rückstellbaren Unterbrecher (BRK1-BRK6) elektrisch verbunden ist, der mindestens eine Unterbrecher einen zugeordneten Drücker (POU1-POU6) für seine Rückstellung aufweist und ein Unterbrecher (BRK1-BRK6) über ein zugeordnetes elektrisches Kabel mit mindestens einer Buchse (J1-J12) verbunden ist, **dadurch gekennzeichnet, dass** das Gehäuse (PDU) das Gehäuse ist, das in einem der Ansprüche 1 bis 7 definiert ist.
